# EUROPEAN PATENT SPECIFICATION

(11) **EP 2 084 920 B1**
(45) Date of publication and mention of the grant of the patent: **30.12.2015**
(21) Application number: 07823211.3
(22) Date of filing: 24.10.2007
(51) Int. Cl.: H04W 88/06, H04W 4/02, G01S 1/68

(54) **A SYSTEM, MOBILE STATION AND A METHOD OF PROVIDING LOCATION BASED INFORMATION**
SYSTEM, MOBILSTATION UND VERFAHREN ZUR BEREITSTELLUNG VON AUF DEM ORT BASIERENDEN INFORMATIONEN
SYSTÈME, STATION MOBILE ET PROCÉDÉ DE FOURNITURE D'INFORMATIONS BASÉES SUR LA LOCALISATION

(30) Priority: 25.10.2006 FI 20065677
(43) Date of publication of application: 05.08.2009
(73) Proprietor: TELIASONERA AB, 106 63 Stockholm (SE)
(72) Inventor: SALOMAA, Jukka, 00800 Helsinki (FI); PAANANEN, Jorma, 00100 Helsinki (FI); SUIKKANEN, Jukka, 02320 Espoo (FI)
(74) Representative: Kolster Oy Ab
(86) International application number: PCT/FI2007/050574
(87) International publication number: WO 2008/049971

(56) References cited:
- EP-A1- 1 265 447
- WO-A1-02/078381
- US-A1- 2003 036 391
- US-A1- 2005 043 043
- US-A1- 2006 109 811
- US-B1- 6 549 625

## Description

### BACKGROUND OF THE INVENTION

### 1. Field of the Invention

This invention relates to a solution for providing a mobile station with location based information, in other words to a solution, where predetermined information is transmitted to a mobile station located in a predetermined location.

### 2. Description of Prior Art

Previously there are known solutions where a GPS receiver (Global Positioning System) integrated in a mobile station, or alternatively location information obtained from a cellular radio system, are used to determine the location of a mobile station. In these solutions information about the position of the mobile station is transmitted to a server of a service provider, which, based on the location of the mobile station, determines when and what location information should be transmitted to the mobile station in question. A drawback with the above mentioned prior art solutions is that sensitive position information which makes it possible to follow up the movement of a mobile station is regularly given to a service provider.

Previously there is also known a solution where a server with a transmitter for a short-range radio system, such as a Bluetooth transmitter, is arranged at a predetermined location to broadcast predetermined information to all mobile stations located within the coverage area of the transmitter. A drawback with a solution of this kind to transmit location based information is the equipment costs, as it becomes necessary to provide every location where location based information should be provided to mobile stations with a server of its own.

Previously there is also known from EP - 1 265 447 A1 a solution where objects, such as work of art, are assigned codes that uniquely identify the object in question, and where a transmitter transmitting this code is attached to or arranged close to the work in question. Once a mobile station receives the code and address information, it can transmit the code in question to a remote site by using the received address in order to obtain information about the object in question. A drawback with such a solution is, however, that the operator of the system will obtain the information identifying that the mobile station in question is located at the site of this particular object.

### SUMMARY OF THE INVENTION

An object of the present invention is to solve the above drawbacks by providing a simple and cheap solution for transmitting location based information to mobile stations without a need to regularly provide sensitive location information to service providers.

These and other objects of the invention are solved with a system according to claim 1 and a method according to claim 7.

According to one aspect of the invention, a transmitter broadcasting a unique code is arranged at a predetermined location. A mobile station with an information client which receives this unique code transmits a request including said unique code to a server, which in response to the request retrieves from a storage information for the location in question, and transmits this information to the mobile station. A need to provide service providers with a possibility to track the movement of mobile stations and also a need to arrange servers at each location where location based information should be provided are avoided.

Preferred embodiments of the system and method appear from the enclosed dependent claims.

### BRIEF DESCRIPTION OF DRAWINGS

In the following the invention will be described by way of example and with reference to the attached drawings, in which
Figure 1 is a flow diagram illustrating an embodiment of the present invention, and
Figures 2 and 3 are block diagrams illustrating an embodiment of the present invention.

### DESCRIPTION OF SOME EMBODIMENTS

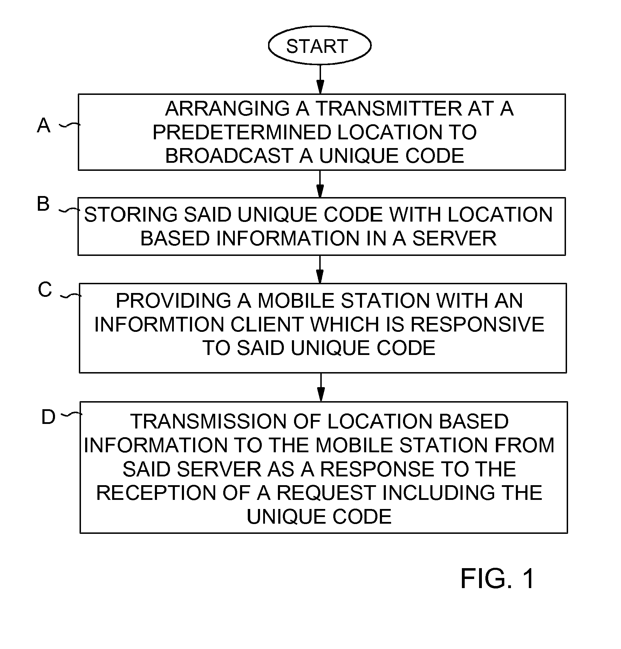

Figure 1 is a flow diagram illustrating an embodiment of the present invention.

In block A, a transmitter of a radio system is arranged at a predetermined location and the transmitter is configured to broadcast a unique code. A 'unique code' refers to a transmitter specific code. In order to make it possible to identify the location in question, other transmitters included in the system should not use the same unique code. The transmitter may be a Bluetooth, WLAN (Wireless Local Area Network), WiMAX (Worldwide Interoperability for Microwave Access) or RFID (Radio Frequency IDentification) transmitter, for instance. The range of the transmitter therefore varies depending on the implementation. A relatively short range makes it possible to reduce the area where specific location based information is provided. If a short-range radio system is selected for use, the accuracy of the area where specific location based information is provided is improved. The transmitter is preferably arranged to repeatedly broadcast the predetermined unique code. The unique code can be broadcasted once a minute, for instance.

In block B the unique code and associated location based information are stored in a data storage of a server. Location based information refers in this context to information that should be transmitted to mobile stations which are located in or arrive at a specific location.

In block C a mobile station is provided with an information client. The information client can in practice consist of software which is stored into a mobile station and run by the processor of the mobile station in order to control the operation of the mobile station in question. The mobile station with the information client listens passively on signals transmitted by the radio system. Once the information client detects a new unique code, it controls the transmitter of the mobile station to transmit a request including the unique code to the server via a mobile communication system.

In block D the server uses the unique code received in the request from the mobile station to retrieve associated location based information from a data storage. The retrieved location based information is transmitted to the mobile station via the mobile communication system. The server can be configured to transmit said location based information to said mobile station by utilizing a GPRS (General Packet Radio Service), 3G-data or SMS (Short Message Service) feature of the mobile communication system, for instance. The location based information may include data for displaying text, graphics or a WAP page (Wireless Application Protocol) on the display of said mobile station. Also other types of location based information are possible, such as data for displaying a video, for producing sounds, or for producing a link, which can later on be used by the user of the mobile station to retrieve additional information.

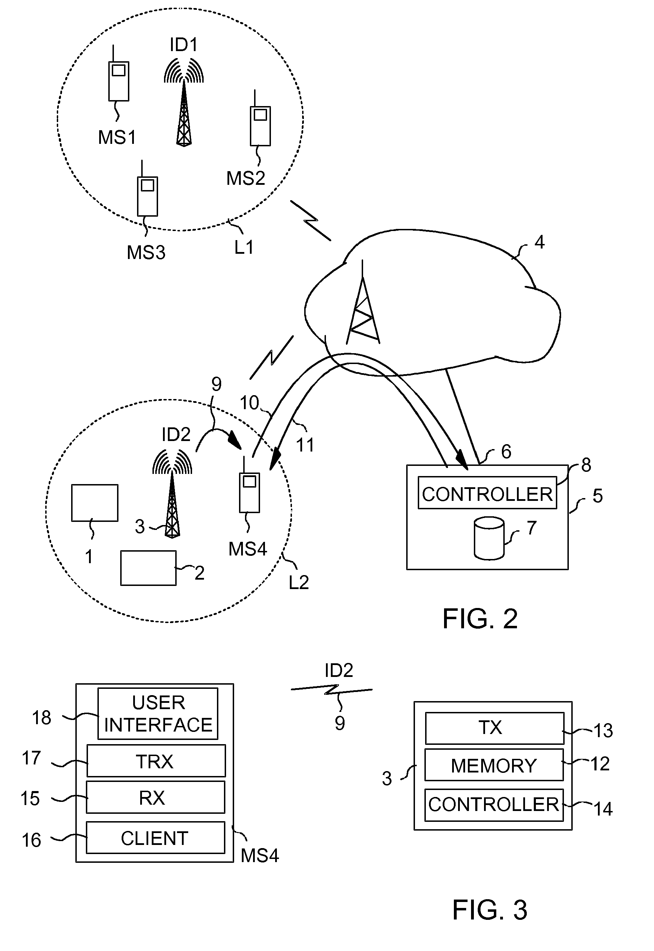

Figures 2 and 3 are block diagrams illustrating an embodiment of the present invention. Figure 2 shows two transmitters arranged for providing location based information to two predetermined locations L1 and L2.

It is by way of example assumed that the transmitter at location L1 is arranged in a shop, at the arena of a sports event, or at the location of a music festival in order to provide all mobile stations MS1 - MS3 located at or arriving at the location L1 in question with location based information. The location based information may include offers for sale, results of the sports event, or an up-to-date schedule of events at the music festival, for instance. In order to make this possible the transmitter at location L1 is arranged to broadcast a unique code ID1 with radio signals.

In addition, by way of example, it is assumed that the transmitter 3 at location L2 is arranged at a location where two different shops 1 and 2 want to transmit location based information to all mobile stations MS4 arriving at the location L2 in question. In order to make this possible the transmitter 3 in location 2 is arranged to broadcast a unique code ID2 with radio signals.

The transmitter 3 comprises a memory 12 where the unique code ID2 is stored. A controller 14, which may be implemented as a processor running suitable software, is configured to retrieve the unique code ID2 from the memory 12 and to control the transmitter 13 to broadcast the unique code ID2.

The transmitter 3 may be implemented as a mobile telephone or a personal computer which is provided with a transmitter, and which is configured by software to repeatedly broadcast the unique code ID2. Alternatively the transmitter 3 may be implemented as a stand-alone device consisting of circuitry and possibly of control software. In the following example it is assumed that the unique code ID2 is transmitted by radio signals 9 from a Bluetooth transmitter, in other words from a transmitter of a short-range radio system.

The mobile station MS4 comprises an information client 16, which may be implemented as a program that is run by the processor of the mobile station MS4, for instance. The information client 16 controls the receiver 15 to continuously and passively monitor the surroundings for possible Bluetooth broadcasts. The information client 16 will thus detect the unique code ID2 transmitted by the transmitter 3.

Once the information client 16 has verified that the unique code is new (the mobile station has not recently used this specific unique code in order to obtain location based information), the information client 16 controls the radio transceiver 17 to transmit a request 10 via the mobile communication system to the server 5. The request can be transmitted by utilizing a GPRS (General Packet Radio Service), 3G-data or SMS (Short Message Service) feature of the mobile communication system, for instance.

The server 5 is connected to the mobile communication system via an interface 6. The server 5 comprises a data storage 7, which can be implemented with any suitable means for storing data, such as memory circuits or a hard-disk, for instance. The server can be implemented as shown in the figures, in other words as a separate element which is connected to a mobile communication system. Alternatively it is possible to integrate the functions of the server into one of the network elements of the mobile communication system.

The data storage 7 contains location based information for a plurality of locations. Unique codes which can be used for identifying the location where specific location based information should be provided are stored in connection with the location based information in the data storage. In the example of Figure 2 the data storage 7 may contain:

| **Unique code** | **Location based information** |
|---|---|
| ID1 | DATA1 |
| ID2 | DATA2, DATA3 |

If a request containing the unique code ID1 is received, the server should reply by transmitting the data entity DATA1 to the mobile station which originally transmitted the request. If, on the other hand, a request containing the unique code ID2 is received, the server should reply by transmitting the data entities DATA2 and DATA3 to the mobile station which originally transmitted the request.

In the example of Figure 2, the server 5 receives a request 10 containing the unique code ID2. The mobile station MS4 which originally transmitted the request may be identified based on information received by the server from the mobile communication system 4 in connection with the request. The controller 8 of the server, which can be implemented as a processor running a predetermined program, for instance, therefore retrieves from the memory 7 data entities DATA2 and DATA3. These data entities are transmitted by the server 5 via the mobile communication system 4 to the mobile station MS4. The data entities DATA2 and DATA3, in other words the location based information associated with the unique code ID2, can be transmitted by utilizing a GPRS (General Packet Radio Service), 3G-data or SMS (Short Message Service) feature of the mobile communication system 4, for instance.

The information client 16 detects that location based information has been received with the transceiver 17 of the mobile station MS4 via the mobile communication system. The information client 16 therefore controls the user interface 18 of the mobile station in order to provide this location based information to the user. The user interface may include a keyboard, a display, a loudspeaker and a microphone, for instance. In this example it is assumed that both data entities DATA2 and DATA3 which are included in the location based information include data for displaying text, graphics or a WAP-page on a display included in the user interface 18. It is by way of example assumed that data entity DATA2 includes data for displaying a first advertisement which relates to products available at shop 1, while the second data entity DATA3 includes data for displaying a second advertisement which relates to products available at shop 2.

It is to be understood that the above description and the accompanying figures are only intended to illustrate the present invention. It will be obvious to those skilled in the art that the invention can be varied and modified also in other ways without departing from the scope of the invention.

## Claims

1. A system for providing location-based information said system comprising:
mobile stations (MS4) each comprising a memory, a processor, a receiver, a transceiver and a user interface,
a server (5) comprising
a data storage (7) for maintaining unique codes (ID1, ID2) and associated location-based information,
an interface (6) for receiving requests via a mobile communication system (4) and for transmitting location-based information via said mobile communication system (4) to the mobile stations (MS4), and
a controller (8) configured to retrieve location-based information associated with each unique code (ID1, ID2) from said data storage (7), and to transmit said retrieved location-based information via said mobile communication system (4) to the mobile stations (MS4) as a response to a request (10) from the mobile stations (MS4) including said unique code (ID1, ID2), and
a short-range transmitter (13) arranged at a predetermined location and comprising a memory (12) wherein one of the unique codes (ID2) is stored, said one of the unique codes (ID2) and associated location-based information being stored in the data storage of said server (5), said short-range transmitter further comprising a controller (14) configured to control said transmitter (13) to repeatedly broadcast said one of the unique codes (ID2),
wherein the unique codes (ID1, ID2) are transmitter specific codes,
**characterized in that**
the data storage (7) maintains for each unique code (ID2) of a transmitter assigned for at least two location-based data entities more than one data entity (DATA2, DATA3) of location-based information, and **in that** one of the mobile stations (MS4) comprises an information client (16) consisting of software stored into the memory of the mobile station (MS4) and run by the processor of the mobile station (MS4), which information client (16) is configured to control the receiver of the mobile station (MS4) to passively monitor the surroundings for broadcasts, and as a response to the reception of said one of the unique codes (ID1, ID2) broadcasted by the short-range transmitter (13), to control the transceiver (17) of said mobile station (MS4) to transmit the request including said one of the unique codes (ID2) via said mobile communication system (4) to the server (5), without providing said server (5) with information about the position of the mobile station (MS4), and to provide the user of the mobile station (MS4) via the user interface (18) with location-based information received by said transceiver (17) from said server (5) via said mobile communication system (4).

2. A system according to claim 1, **characterized in that**
said server (5) is arranged to transmit said location-based information to said mobile station (MS4) by utilizing a GPRS, 3G-data or SMS feature of said mobile communication system (4).

3. A system according to claim 1 or 2, **characterized in that** said location-based information includes data for displaying text, graphics or a WAP-page on a display of said mobile station (MS4).

4. A system according to one of claims 1 to 3, **characterized in that** said short-range transmitter (13) is a Bluetooth, WLAN, WiMAX or RFID transmitter.

5. A system according to one of claims 1 to 4, **characterized in that** said short-range transmitter (13) consists of a mobile telephone or a personal computer.

6. A system according to one of claims 1 to 5, **characterized in that** said short-range transmitter (13) consists of a stand-alone equipment.

7. A method of providing mobile stations with location-based information, said method comprises:
arranging (A) at a predetermined location a transmitter (3) configured to broadcast a unique code (ID2),
storing (B) said unique code (ID2) together with location-based information, which is associated with said predetermined location, in a server (5),
wherein the unique code (ID2) is a transmitter specific code,
**characterized in that**
more than one data entity (DATA2, DATA3) of location-based information is maintained in the server for each unique code (ID2) of the transmitter which is assigned for at least two location-based data entities,
the server is configured to retrieve and transmit (D) to the mobile stations said location-based information via a mobile communication system (4) as a response to a request from the mobile stations (MS4) including said unique code (ID2) without said server (5) of a service provider being provided with information about the position of a mobile station (MS4) having transmitted said request, and
providing (C) said mobile station (MS4) with an information client (16) consisting of software stored into a memory of the mobile station (MS4) and run by a processor of the mobile station (MS4), which information client (16) is configured to control a receiver of the mobile station (MS4) to passively monitor the surroundings for broadcasts, and as a response to the reception of said broadcasted unique code (ID2), to transmit the request including said unique code (ID2) to said server (5), without providing said server (5) with information about the position of the mobile station (MS4), via a mobile communication system, and to provide the user of the mobile station (MS4) with location-based information transmitted by said server (5) to said mobile station (MS4) via said mobile communication system (4).

## Patentansprüche

1. System zum Bereitstellen von auf dem Ort basierenden Informationen, wobei das System umfasst:
Mobilstationen (MS4), die jeweils einen Speicher, einen Prozessor, einen Empfänger, einen Sendeempfänger und eine Benutzerschnittstelle umfassen,
einen Server (5), umfassend
einen Datenspeicher (7) zum Enthalten von eindeutigen Codes (ID1, ID2) und von zugehörigen auf dem Ort basierenden Informationen,
eine Schnittstelle (6) zum Empfangen von Anfragen über ein mobiles Kommunikationssystem (4) und zum Senden von auf dem Ort basierenden Informationen über das mobile Kommunikationssystem (4) an die Mobilstationen (MS4), und
eine Steuerung (8), die dazu konfiguriert ist, die den einzelnen eindeutigen Codes (I D1, ID2) zugeordneten auf dem Ort basierenden Informationen aus dem Datenspeicher (7) abzurufen und die abgerufenen auf dem Ort basierenden Informationen über das mobile Kommunikationssystem (4) an die Mobilstationen (MS4) als Reaktion auf eine Anforderung (10) von den Mobilstationen (MS4) zu senden, die den eindeutigen Code (ID1, ID2) enthält, und
einen Sender (13) mit kurzer Reichweite, der an einer vorgegebenen Position angeordnet ist und einen Speicher (12) umfasst, in dem einer der eindeutigen Codes (ID2) gespeichert ist, wobei der eine der eindeutigen Codes (ID2) und die zugehörigen auf dem Ort basierenden Informationen in dem Datenspeicher des Servers (5) gespeichert sind, wobei der Sender mit kurzer Reichweite des Weiteren eine Steuerung (14) umfasst, die dazu konfiguriert ist, den Sender (13) mit kurzer Reichweite so zu steuern, dass er wiederholt einen der eindeutigen Codes (ID2) rundsendet, wobei die eindeutigen Codes (ID1, ID2) senderspezifische Codes sind,
**dadurch gekennzeichnet, dass**
der Datenspeicher (7) für jeden eindeutigen Code (ID2) eines Senders, der mindestens zwei auf dem Ort basierenden Dateneinheiten zugeordnet ist, mehr als eine Dateneinheit (DATA2, DATA3) von auf dem Ort basierenden Informationen enthält, und dass
eine der Mobilstationen (MS4) einen Informations-Client (16) umfasst, der aus in dem Speicher der Mobilstation (MS4) gespeicherter Software besteht, die von dem Prozessor der Mobilstation (MS4) ausgeführt wird, wobei der Informations-Client dazu konfiguriert ist, den Empfänger der Mobilstation (MS4) so zu steuern, dass er passiv die Umgebung auf Rundsendungen überwacht, und als Reaktion auf den Empfang von einem der eindeutigen Codes (ID1, ID2), die von dem Sender (13) mit kurzer Reichweite rundgesendet werden, den Sendeempfänger (17) der Mobilstation (MS4) dazu steuert, die Anforderung mit dem einen der eindeutigen Codes (ID2) über das mobile Kommunikationssystem (4) an den Server (5) zu senden, ohne dem Server (5) Informationen über die Position der Mobilstation (MS4) zu übermitteln, und dem Benutzer der Mobilstation (MS4) über die Benutzerschnittstelle (18) auf dem Ort basierende Informationen bereitzustellen, die von dem Sendeempfänger von dem Server (5) über das mobile Kommunikationssystem (4) empfangen werden.

2. System nach Anspruch 1, **dadurch gekennzeichnet, dass**
der Server (5) dazu eingerichtet ist, auf dem Ort basierende Informationen unter Verwendung einer GPRS-, 3G-Daten- oder SMS-Funktion des mobilen Kommunikationssystems (4) an die Mobilstation (MS4) zu senden.

3. System nach Anspruch 1 oder 2, **dadurch gekennzeichnet, dass** die auf dem Ort basierenden Informationen Daten zum Anzeigen von Text, Grafiken oder einer WAP-Seite auf dem Display der Mobilstation (MS4) enthalten.

4. System nach einem der Ansprüche 1 bis 3, **dadurch gekennzeichnet, dass** der Sender (13) mit kurzer Reichweite ein Bluetooth, WLAN, WiMAX oder RFID-Sender ist.

5. System nach einem der Ansprüche 1 bis 4, **dadurch gekennzeichnet, dass** der Sender (13) mit kurzer Reichweite aus einem Mobiltelefon oder einem PC besteht.

6. System nach einem der Ansprüche 1 bis 5, **dadurch gekennzeichnet, dass** der Sender (13) mit kurzer Reichweite ein autonomes Gerät ist.

7. Verfahren zum Versorgen von Mobilstationen mit auf dem Ort basierenden Informationen, wobei das Verfahren umfasst:
Anordnen (A), an einer vorgegebenen Position, eines Senders (3), der dazu konfiguriert ist, einen eindeutigen Code (ID2) rundzusenden,
Speichern (B) des eindeutigen Codes (ID2) zusammen mit auf dem Ort basierenden Informationen, die der vorgegebenen Position zugeordnet sind, in einem Server (5),
wobei der eindeutige Code (ID2) ein senderspezifischer Code ist,
**dadurch gekennzeichnet, dass** mehr als eine Dateneinheit (DATA2, DATA3) an auf dem Ort basierenden Informationen in dem Server für jeden eindeutigen Code (ID2) des Senders enthalten sind, der mindestens zwei auf dem Ort basierenden Dateneinheiten zugeordnet ist,
der Server dazu konfiguriert ist, die auf dem Ort basierenden Informationen abzurufen und in Reaktion auf eine Anforderung von den Mobilstationen (MS4), welche den eindeutigen Code (ID2) enthält, über ein mobiles Kommunikationssystem (4) an die Mobilstationen zu senden (D), ohne dass der Server (5) eines Dienstanbieters Informationen über die Position einer Mobilstation (MS4) erhält, welche die Anforderung gesendet hat, und
durch Bereitstellen (C) eines Informations-Client (16) für die Mobilstation (MS4), der aus in dem Speicher der Mobilstation (MS4) gespeicherter Software besteht, die von dem Prozessor der Mobilstation (MS4) ausgeführt wird, wobei der Informations-Client dazu konfiguriert ist, einen Empfänger der Mobilstation (MS4) so zu steuern, dass er passiv die Umgebung auf Rundsendungen überwacht, und als Reaktion auf den Empfang des rundgesendeten eindeutigen Codes (ID2) die Anforderung mit dem eindeutigen Code (ID2) über ein mobiles Kommunikationssystem an den Server (5) zu senden, ohne dem Server (5) Informationen über die Position der Mobilstation (MS4) zu übermitteln, und dem Benutzer der Mobilstation (MS4) auf dem Ort basierende Informationen bereitzustellen, die von dem Server (5) über das mobile Kommunikationssystem (4) an die Mobilstation (MS4) gesendet werden.

## Revendications

1. Système pour fournir des informations basées sur la localisation, ledit système comprenant :
des stations mobiles (MS4) comprenant chacune une mémoire, un processeur, un récepteur, un émetteur-récepteur et une interface utilisateur,
un serveur (5) comprenant
un stockage de données (7) pour maintenir des codes uniques (ID1, ID2) et des informations basées sur la localisation associées,
une interface (6) pour recevoir des requêtes via un système de communication mobile (4) et pour transmettre des informations basées sur la localisation via ledit système de communication mobile (4) aux stations mobiles (MS4), et
un contrôleur (8) configuré pour récupérer des informations basées sur la localisation associées à chaque code unique (ID1, ID2) à partir dudit stockage de données (7), et pour transmettre lesdites informations basées sur la localisation récupérées aux stations mobiles (MS4), via ledit système de communication mobile (4), en réponse à une requête (10) émanant des stations mobiles (MS4) incluant ledit code unique (ID1, ID2), et
un émetteur à courte portée (13) disposé à une localisation prédéterminée et comprenant une mémoire (12) dans laquelle l'un des codes uniques (ID2) est stocké, ledit un des codes uniques (ID2) et des informations basées sur la localisation associées étant stockés dans le stockage de données dudit serveur (5), ledit émetteur à courte portée comprenant en outre un contrôleur (14) configuré pour commander audit émetteur (13) de diffuser de manière répétitive ledit un des codes uniques (ID2),
dans lequel les codes uniques (ID1, DI2) sont des codes spécifiques d'émetteur,
**caractérisé en ce que**
le stockage de données (7) maintient pour chaque code unique (ID2) d'un émetteur alloué à au moins deux entités de données basées sur la localisation plus d'une entité de données (DATA2, DATA3) d'informations basées sur la localisation, et **en ce que**
l'une des stations mobiles (MS4) comprend un client d'information (16) consistant en un logiciel stocké dans la mémoire de la station mobile (MS4) et exécuté par le processeur de la station mobile (MS4), lequel client d'information (16) est configuré pour commander au récepteur de la station mobile (MS4) de surveiller passivement les environs vis-à-vis de diffusions, et en réponse à la réception dudit un des codes uniques (ID1, ID2) diffusés par l'émetteur à courte portée (13), commander à l'émetteur-récepteur (17) de ladite station mobile (MS4) de transmettre la requête incluant ledit un des codes uniques (ID2) au serveur (5), via ledit système de communication mobile (4), sans fournir audit serveur (5) d'informations concernant la position de la station mobile (MS4), et fournir à l'utilisateur de la station mobile (MS4), via l'interface utilisateur (18), des informations basées sur la localisation reçues par ledit émetteur-récepteur (17) en provenance dudit serveur (5), via ledit système de communication mobile (4).

2. Système selon la revendication 1, **caractérisé en ce que**
ledit serveur (5) est conçu pour transmettre lesdites informations basées sur la localisation à ladite station mobile (MS4) en utilisant une fonctionnalité GPRS, données 3G ou SMS dudit système de communication mobile (4).

3. Système selon la revendication 1 ou 2, **caractérisé en ce que** lesdites informations basées sur la localisation comportent des données pour un affichage de texte, de graphiques ou d'une page WAP sur un écran de ladite station mobile (MS4).

4. Système selon l'une des revendications 1 à 3, **caractérisé en ce que** ledit émetteur à courte portée (13) est un émetteur Bluetooth, WLAN, WiMAX ou RFID.

5. Système selon l'une des revendications 1 à 4, **caractérisé en ce que** ledit émetteur à courte portée (13) consiste en un téléphone mobile ou un ordinateur personnel.

6. Système selon l'une des revendications 1 à 5, **caractérisé en ce que** ledit émetteur à courte portée (13) consiste en un équipement autonome.

7. Procédé de fourniture d'informations basées sur la localisation à des stations mobiles, ledit procédé comprenant :
la mise à disposition (A), à une localisation prédéterminée, d'un émetteur (3) configuré pour diffuser un code unique (ID2),
le stockage (B) dudit code unique (ID2) en même temps que des informations basées sur la localisation, qui sont associées à ladite localisation prédéterminée, dans un serveur (5),
dans lequel le code unique (ID2) est un code spécifique d'émetteur,
**caractérisé en ce que**
plus d'une entité de données (DATA2, DATA3) d'informations basées sur la localisation est maintenue dans le serveur pour chaque code unique (ID2) de l'émetteur qui est alloué à au moins deux entités de données basées sur la localisation,
le serveur est configuré pour récupérer et transmettre (D) aux stations mobiles lesdites informations basées sur la localisation via un système de communication mobile (4), en réponse à une requête émanant des stations mobiles (MS4) incluant ledit code unique (ID2) sans que ledit serveur (5) d'un fournisseur de service reçoive des informations concernant la position d'une station mobile (MS4) ayant transmis ladite requête, et
la fourniture (C) à ladite station mobile (MS4) d'un client d'information (16) consistant en un logiciel stocké dans une mémoire de la station mobile (MS4) et exécuté par un processeur de la station mobile (MS4), lequel client d'information (16) est configuré pour commander à un récepteur de la station mobile (MS4) de surveiller passivement les environs vis-à-vis de diffusions, et en réponse à la réception dudit code unique (ID2) diffusé, transmettre la requête incluant ledit code unique (ID2) audit serveur (5), sans fournir audit serveur (5) d'informations concernant la position de la station mobile (MS4), via un système de communication mobile, et fournir à l'utilisateur de la station mobile (MS4) des informations basées sur la localisation transmises par ledit serveur (5) à ladite stations mobiles (MS4) via ledit système de communication mobile (4).
